Europäisches Patentamt

European Patent Office

Office européen des brevets

(11) Publication number: **0 375 148 B1**

(12) **EUROPEAN PATENT SPECIFICATION**

(45) Date of publication of patent specification: **08.09.93**  (51) Int. Cl.5: **C04B 35/56**, C04B 35/58

(21) Application number: **89311849.7**

(22) Date of filing: **16.11.89**

(54) Production of molded refractory shapes.

(30) Priority: **17.11.88 US 272419**

(43) Date of publication of application:
**27.06.90 Bulletin 90/26**

(45) Publication of the grant of the patent:
**08.09.93 Bulletin 93/36**

(84) Designated Contracting States:
**DE FR GB**

(56) References cited:
**EP-A- 0 212 659**
**WO-A-83/00374**
**US-A- 3 661 736**
**US-A- 4 073 845**
**US-A- 4 343 909**

(73) Proprietor: **Praxair S.T. Technology, Inc.**
**441 Sackett Point Road**
**North Haven, CT 06473(US)**

(72) Inventor: **Sara, Raymond Vincent**
**22146 Meadownorth Court**
**Strongsville Ohio 44136(US)**

(74) Representative: **Gore, Peter Manson et al**
**W.P. THOMPSON & CO. Coopers Building**
**Church Street**
**Liverpool L1 3AB (GB)**

Rank Xerox (UK) Business Services
(3.10/3.6/3.3.1)

EP 0 375 148 B1

**Description**

The present invention relates to the manufacture of hot-pressed shapes, particularly of metal borides and monocarbides, and more especially of $TiB_2$ and SiC.

In the manufacture of hot-pressed or sintered metal carbides and borides from powders, a powder, such as, for example, $TiB_2$, is compressed in a mold at an elevated temperature to sinter the particles of the powder together. Often, these sintered shapes are highly stressed and have poor resistance to mechanical and thermal shock. This is believed to be due in large part to the thermal anisotropy of many of these materials, such as, for example, $TiB_2$, and the large grain or particle size in the sintered shapes. Even though finely divided powders may be employed to form the sintered shapes, the temperatures and pressures in which sintered shapes are commonly formed contribute to grain growth, resulting in sintered shapes with undesirably large grain size.

The effect of large grain size can be shown by the well-known Griffith-Irwin fracture equation. According to this equation, the strength (S) of ceramics is a function of the critical flaw size (c), and the stress intensity factory (Kc) as follows:

$$S = \frac{(Kc)}{(Y)(c)} \quad ;$$

wherein Y is a geometrical factor. Critical flaws are usually related to grain size, i.e. large grains will geometrically accommodate larger defects in the sintered shape. Therefore, the critical flaw size of sintered bodies with large grain size will generally be greater. and the strength will be smaller, than for sintered bodies with a smaller grain size. In addition, for thermally anisotropic materials, like $TiB_2$, the tendency for cracks developing in the grains or crystallites themselves or in grain boundaries increases with the grain size. Thus, in order to maximize the strength of sintered bodies, and minimize the tendency of crack formation in the crystallites and grain boundaries, it is desirable to maintain as low a grain size as possible.

An additional problem is that the network of cracks formed in large grained sintered structures affect not only the mechanical properties, such as, for example, strength. Young's modulus, fracture toughness, and the like, but also increase the permeability of the structure to molten metals and gases, which is often undesirable for sintered shapes used in refractory applications.

Because of the difficulty in forming small grain sintered bodies, due to grain growth during formation of the body, there is a need for a method wherein sintered bodies can be formed without the formation of large grains.

US-A- 4 408 114 discloses the manufacture of titanium diboride electrodes for Hall cells using a small amount of carbonaceous material to act as a scavenger during the sintering of the shape.

US-A- 3 661 736 discloses the manufacture of electrodes for Hall cells comprising graphite and 2 to 50 volume percent refractory hard metal.

It has now been found possible to provide a method for sintering shapes from powders such as, for example, those of transition metal monocarbides and borides, wherein the grain growth is minimized to form a small grain sintered structure.

According to the present invention there is provided a method for producing a molded refractory shape, which comprises:

(a) providing a grain growth inhibiting powder of a graphite material having a crystalline structure:

(b) providing a refractory powder non-reactive with the grain growth inhibiting powder and having less than about 1.5 weight percent oxygen:

(c) mixing between about 95 and about 99.5 weight percent, based upon the total weight of the mixture, of said refractory powder and between about .5 and about 5 weight percent, based upon the total weight of the mixture of said grain growth inhibiting powder; and

(d) compressing the mixture at a pressure and temperature sufficient to sinter the refractory powder into the molded shape.

The refractory powders used in the process of the present invention are generally those having a chemical compatibility with the grain growth inhibiting powder, such that they do not significantly chemically react with the grain growth inhibiting powder during the sintering of powder. These include $B_4C$, SiC, and transition metal borides and monocarbides. Of particular commercial interest are $TiB_2$ and SiC.

The oxygen content of the refractory powder should be preferably as low as possible. If the oxygen content of the refractory powder is higher than about 1.5 wt.%, the grain growth inhibitor, particularly if the grain growth inhibitor is graphite, reacts with the oxygen, leaving little or no grain growth inhibiting powder to function as a grain growth inhibitor. Accordingly there is little or no improvement in the toughness of the sintered body. To minimize the effect of excess oxygen content, the oxygen content of refractory powder is preferably less than about 0.5 wt.% oxygen.

The particle size of the refractory powder should be as small as practical, as the particle size of the powder determines the lowest possible grain size of the sintered shape. Very small powder sizes, however, may have an excessive oxygen content, and may even be pyrophoric in air. Typically, refractory powders with an average particle size less than 10 $\mu$m and greater than $0.5 \times 10^{-6}$ m (0.5 microns) are suitable. Preferably the refractory powders have an average particle size between about $1 \times 10^{-6}$ and $5 \times 10^{-6}$ m (about 1 and 5 microns).

The grain growth inhibiting powder is preferably graphite, but may be a powdered material with a graphite-like crystal structure, such as boron nitride. Preferred materials have a well developed crystal structure, and include for example, synthetic graphite, and natural graphite. Graphite fibers may also be used, but are less preferred. The particle size of the grain growth inhibiting powder is not critical, but should be sufficiently fine to allow even distribution of the grain growth inhibiting powder through the refractory powder when the two are mixed. For the same reason, a narrow size distribution of the powder is preferred.

The grain growth inhibiting powder is added in an amount sufficient to prevent excessive grain growth. Since the grain growth inhibiting powder, beyond the grain growth inhibition, gives little or no contribution to the strength of the sintered body, amounts of grain growth inhibiting powder beyond the amount required to inhibit grain growth, about 5 wt.%, are not preferred. Suitable amounts of grain growth inhibiting powder are typically between 0.5 and 5 wt.%, preferably between 1 and 5 wt.%, with between 95 and 99.5 wt.%, preferably between 95 and 99 wt.%, of the refractory powder.

In the Examples which follow, the following refractory powders and grain growth inhibiting powder were used;

Grade A TiB$_2$ - A TiB$_2$ powder with an average particle size of approximately 2 $\mu$m and a total oxygen content near 2.5 weight percent.

Grade C TiB$_2$ - A TiB$_2$ powder with an average particle size of approximately 8 $\mu$m, an oxygen content of about 0.3 weight percent, and available from H. Starck, 280 Park Avenue, New York, NY 10017.

Graphite A - A synthetic graphite prepared by graphitizing an isotropic coke with spherically shaped particles and which produces a graphite with a high coefficient of thermal expansion. Graphite A has an average particle size of about $15 \times 10^{-6}$ m (15 microns) with the largest particles about $75 \times 10^{-6}$ m (75 microns) in diameter.

The flexural strength in the Examples below was measured on samples 6mm square and 36mm in length employing the ASTM C-790 test procedure.

Example I

A mixture of 5 wt.% graphite and 95 wt.% refractory powder (5 grams Graphite A powder and 95 grams of Grade C TiB$_2$ powder) was dry blended for 24 hours in a 3.785 litres (one-gallon can) having internal fins and containing a small length of chain. Thirty-five grams of the mixture were charged into a 3.8 cm diameter graphite mold. The mold was placed into a chamber and the mold and chamber evacuated to $6.665 \times 10^{-3}$ Pa ($5 \times 10^{-5}$ Torr) and then purged with argon. The powder was then hot-pressed under a pressure of 28 MPa, and at a temperature of 2000 °C for one hour producing a sintered shape in the form of a disc. The shape was allowed to cool and was removed from the mold. The density of the shape was 98.8% of theoretical (calculated on the basis of weight fractions of TiB$_2$ and C, and their respective densities 4.52 g/cm$^3$ and 2.25 g/cm$^3$). The flexural strength was 445 MPa ($64.4 \times 10^3$ psi).

Example II

Sintered shapes were produced and tested as in Example I, except the amounts of graphite and TiB$_2$ powders were adjusted as shown in Table A below.

In the accompanying drawings:-

Figure 1 is a graph showing the graphite content and the strength of sintered shapes according to the present invention and comparative sintered shapes; and

Figure 2 is a graph showing the graphite content and the density of sintered shapes according to the present invention and comparative sintered shapes.

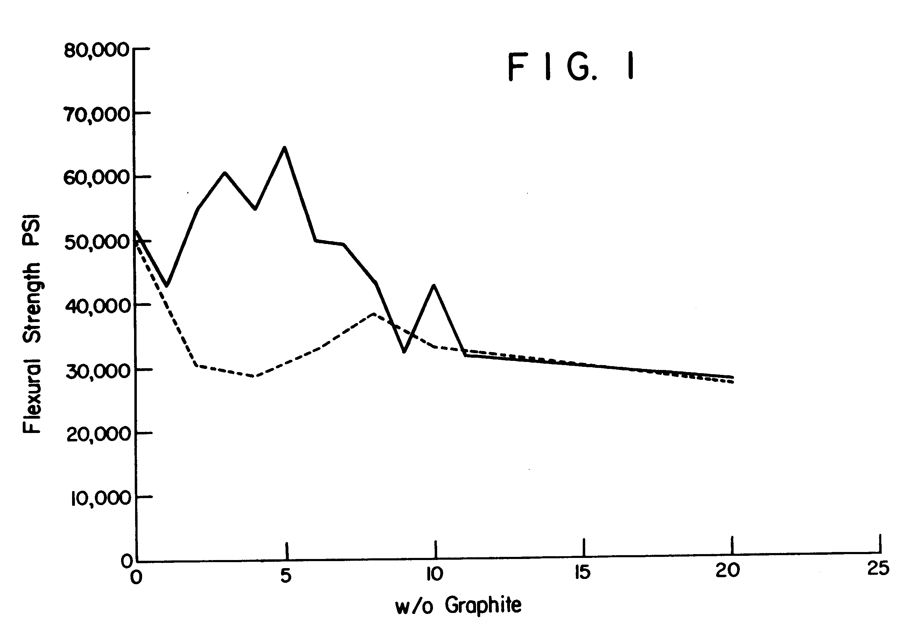

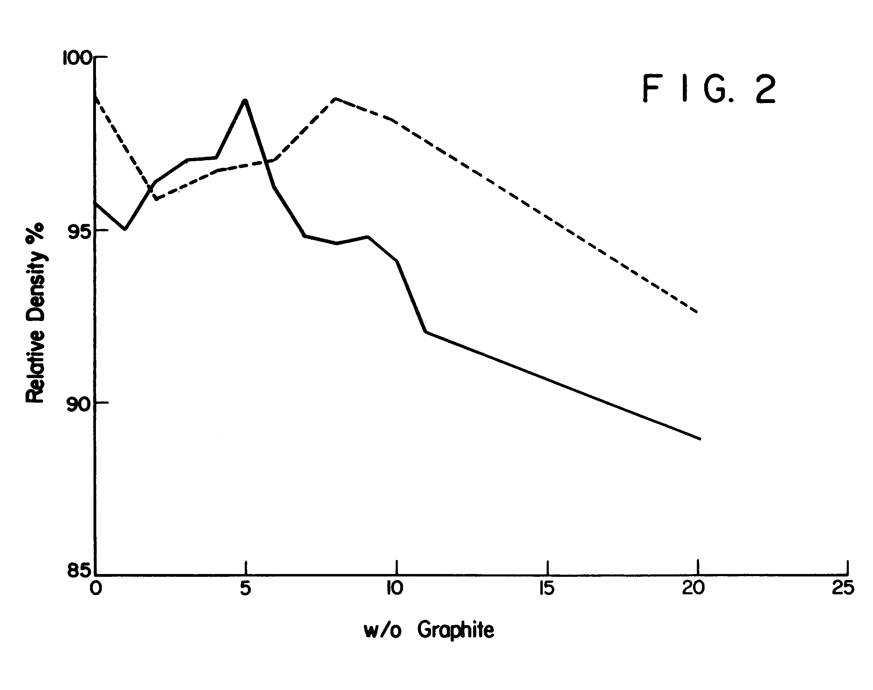

The flexural strengths and density are summarized in Table A, and in Figure 1 , showing the flexural strength, and Figure 2, showing the density. The density is shown as the percentage relative to the theoretical density. In Figures 1 and 2, the flexural strength and density values for this example are shown by the circles (o). The solid line in Figure 1 shows the strength values for this Example. The solid line in Figures 2 shows the density values for this Example.

Table A

| Graphite - Grade C Titanium Diboride Shapes | | | | |
|---|---|---|---|---|
| Graphite (wt.%) | TiB$_2$ (wt.%) | Flexural Strength | | Density (%) |
| | | psi x 10$^3$ | kPa | |
| 0 | 100 | 51.2 | 353.0 | 95.7 |
| 1 | 99 | 42.6 | 293.7 | 95.0 |
| 2 | 98 | 54.3 | 374.4 | 96.4 |
| 3 | 97 | 60.5 | 417.1 | 97.0 |
| 4 | 96 | 54.8 | 377.8 | 97.1 |
| 5 | 95 | 64.4 | 444.0 | 98.8 |
| 6 | 94 | 49.9 | 344.1 | 96.1 |
| 7 | 93 | 48.8 | 336.5 | 94.8 |
| 8 | 92 | 43.6 | 300.6 | 94.6 |
| 9 | 91 | 32.2 | 222.0 | 94.8 |
| 10 | 90 | 42.6 | 293.7 | 94.1 |
| 11 | 89 | 31.8 | 219.3 | 92.0 |
| 20 | 80 | 27.4 | 188.9 | 89.0 |

As shown by the date shown in Table A and Figure 1, the strength of the shapes increase with an increase graphite content, until a graphite content of 5 wt.% is reached, after which the strength decreases.

Comparative Example I

Sintered shapes were produced and tested as in Example I, except Grade A TiB$_2$ powder was used, and the amounts of graphite and TiB$_2$ powders were adjusted as shown in Table B below. The flexural strengths and density are summarized in Table B, and in Figure 1 for the flexural strength and Figure 2 for the density. The density is shown as the percentage relative to the theoretical density. In Figures 1 and 2, the flexural strength and density values for this Example are shown by the triangles ('). The dotted line Figure 1 shows the strength values. The dotted line in Figure 2 shows the density values.

Table B

| Graphite - Grade A Titanium Diboride Shapes | | | | |
|---|---|---|---|---|
| Graphite (wt.%) | TiB$_2$ (wt.%) | Flexural Strength | | Density (%) |
| | | psi x 10$^3$ | kPa | |
| 0 | 100 | 49.3 | 339.9 | 98.8 |
| 2 | 99 | 30.5 | 210.3 | 95.9 |
| 4 | 98 | 28.8 | 198.6 | 96.7 |
| 6 | 97 | 32.6 | 224.8 | 97.0 |
| 8 | 96 | 38.1 | 262.7 | 98.8 |
| 10 | 95 | 33.0 | 227.5 | 98.1 |
| 20 | 94 | 26.9 | 185.5 | 62.6 |

As shown by the above data of this example in Table B, the refractory powder has a high oxygen content (w 2.5 wt.% oxygen), the addition of graphite powder provides no increase strength of the sintered shape. When compared with the practice of the present invention (Table A), the strengths are significantly lower. This is clearly illustrated in Figure 1.

4

Comparative Example II

Sintered shapes were made using the low oxygen content $TiB_2$ as in Example I using the same procedure except a carbon powder with a non-graphitic crystal structure was used in place of the graphite. The carbon powder was carbon black available under the trademark Sterling R, available from Cabot Corporation.

Table C

| Graphite - Grade - Titanium Diboride Shapes | | | | |
|---|---|---|---|---|
| Graphite (wt.%) | $TiB_2$ (wt.%) | Flexural Strength | | Density (%) |
| | | psi x $10^3$ | kPa | |
| 0 | 100 | 51.2 | 353.0 | 98.8 |
| 5 | 95 | 26.4 | 182.0 | 96.6 |
| 10 | 90 | 26.6 | 183.4 | 95.0 |
| 15 | 85 | 6.7 | 46.2 | 92.2 |

As seen by the above data, the use of a non-graphitic powder did not provide any improvement to the strength of the sintered shapes, but was actually detrimental to the strength of the shapes.

**Claims**

1. A method for producing a molded refractory shape which comprises:
   (a) providing a grain growth inhibiting powder of a graphite material having a crystalline structure;
   (b) providing a refractory powder non-reactive with the grain growth inhibiting powder and having less than about 1.5 weight percent oxygen;
   (c) mixing between about 95 and about 99.5 weight percent, based upon the total weight of the mixture, of said refractory powder and between about .5 and about 5 weight percent, based upon the total weight of the mixture of said grain growth inhibiting powder; and
   (d) compressing the mixture at pressure and temperature sufficient to sinter the refractory powder into the molded shape.

2. A method according to claim 1, wherein the grain growth inhibiting powder is present in an amount between about 1 and about 5 weight percent, based upon the weight of the mixture.

3. A method according to claim 2, wherein the grain growth inhibiting powder is present in an amount between about 2 and about 5 weight percent, based upon the weight of the mixture.

4. A method according to any of claims 1 to 3, wherein the refractory powder has an oxygen content less than about 0.5 weight percent.

5. A method according to any of claims 1 to 4, wherein the refractory powder is selected from $B_4C$, SiC, transition metal borides and transition metal monocarbides.

6. A method according to claim 5, wherein the refractory powder is $TiB_2$ powder.

7. A method according to any of claims 1 to 6, wherein the average particle size of the refractory powder is between about 0.5 $\mu$m and 10 $\mu$m.

8. A method according to claim 7, wherein the average particle size of the refractory powder is between about 1 $\mu$m and 5 $\mu$m.

9. A method according to any of claims 1 to 8, wherein the grain growth inhibiting powder is selected from synthetic graphite powders, natural graphite powders, and graphite fibres.

**10.** A method according to claim 9, wherein the refractory powder is TiB$_2$ powder, and the grain growth inhibiting powder is synthetic graphite powder.

**Patentansprüche**

**1.** Verfahren zum Herstellen von feuerfesten Formkörpern, bei dem:

(a) ein Kornwachstum verhinderndes Pulver aus einem Graphitmaterial mit kristallinem Gefüge vorgesehen wird;

(b) ein feuerfestes Pulver vorgesehen wird, das mit dem Kornwachstum verhindernden Pulver nicht reagiert und weniger als etwa 1,5 Gew.Prozent Sauerstoff enthält;

(c) bezogen auf das Gesamtgewicht des Gemischs zwischen etwa 95 und etwa 99,5 Gew.Prozent des feuerfesten Pulvers und, bezogen auf das Gesamtgewicht des Gemischs, zwischen etwa 0,5 und 5 Gew.Prozent des Kornwachstum verhindernden Pulvers gemischt werden; und

(d) das Gemisch bei einem Druck und einer Temperatur, die ausreichen, um das feuerfeste Pulver zu sintern, zu dem Formkörper gepreßt wird.

**2.** Verfahren nach Anspruch 1, bei dem das Kornwachstum verhindernde Pulver, bezogen auf das Gewicht des Gemischs, in einer Menge zwischen etwa 1 und etwa 5 Gew.Prozent vorliegt.

**3.** Verfahren nach Anspruch 2, bei dem das Kornwachstum verhindernde Pulver, bezogen auf das Gewicht des Gemischs, in einer Menge zwischen etwa 2 und etwa 5 Gew.Prozent vorliegt.

**4.** Verfahren nach einem der Ansprüche 1 bis 3, bei dem das feuerfeste Pulver einen Sauerstoffgehalt von weniger als etwa 0,5 Gew.Prozent hat.

**5.** Verfahren nach einem der Ansprüche 1 bis 4, bei dem das feuerfeste Pulver aus B$_4$C, SiC, Übergangsmetallboriden und Übergangsmetallmonokarbiden ausgewählt ist.

**6.** Verfahren nach Anspruch 5, bei dem das feuerfeste Pulver TiB$_2$-Pulver ist.

**7.** Verfahren nach einem der Ansprüche 1 bis 6, bei dem die mittlere Teilchengröße des feuerfesten Pulvers zwischen etwa 0,5 $\mu$m und 10 $\mu$m liegt.

**8.** Verfahren nach Anspruch 7, bei dem die mittlere Teilchengröße des feuerfesten Pulvers zwischen etwa 1 $\mu$m und 5 $\mu$m liegt.

**9.** Verfahren nach einem der Ansprüche 1 bis 8, bei dem das Kornwachstum verhindernde Pulver aus synthetischen Graphitpulvern, natürlichen Graphitpulvern und Graphitfasern ausgewählt ist.

**10.** Verfahren nach Anspruch 9, bei dem das feuerfeste Pulver TiB$_2$-Pulver ist und das Kornwachstum verhindernde Pulver synthetisches Graphitpulver ist.

**Revendications**

**1.** Procédé de production d'un article réfractaire moulé, qui comprend :

(a) l'utilisation d'une poudre, à action d'inhibition de croissance des grains, d'une matière graphitique à structure cristalline ;

(b) l'utilisation d'une poudre réfractaire non réactive avec la poudre à action d'inhibition de croissance des grains et renfermant moins d'environ 1,5 % en poids d'oxygène ;

(c) le mélange d'une quantité d'environ 95 à environ 99,5 % en poids, sur la base du poids total du mélange, de ladite poudre réfractaire et d'une quantité d'environ 0,5 à environ 5 % en poids, sur la base du poids total du mélange, de ladite poudre à action d'inhibition de croissance des grains ; et

(d) la compression du mélange à une pression et une température suffisantes pour le frittage de la poudre réfractaire en l'article moulé.

**2.** Procédé suivant la revendication 1, dans lequel la poudre à action d'inhibition de croissance des grains est présente en une quantité d'environ 1 à environ 5 % en poids, sur la base du poids du mélange.

**3.** Procédé suivant la revendication 2, dans lequel la poudre à action d'inhibition de croissance des grains est présente en une quantité d'environ 2 à environ 5 % en poids, sur la base du poids du mélange.

**4.** Procédé suivant l'une quelconque des revendications 1 à 3, dans lequel la poudre réfractaire possède une teneur en oxygène inférieure à environ 0,5 % en poids.

**5.** Procédé suivant l'une quelconque des revendications 1 à 4, dans lequel la poudre réfractaire est choisie entre $B_4C$, SiC, des borures de métaux de transition et des monocarbures de métaux de transition.

**6.** Procédé suivant la revendication 5, dans lequel la poudre réfractaire est une poudre de $TiB_2$.

**7.** Procédé suivant l'une quelconque des revendications 1 à 6, dans lequel le diamètre moyen de particules de la poudre réfractaire est compris dans l'intervalle d'environ 0,5 $\mu$m à 10 $\mu$m.

**8.** Procédé suivant la revendication 7, dans lequel le diamètre moyen de particules de la poudre réfractaire est compris dans l'intervalle d'environ 1 $\mu$m à 5 $\mu$m.

**9.** Procédé suivant l'une quelconque des revendications 1 à 8, dans lequel la poudre à action d'inhibition de croissance des grains est choisie entre des poudres de graphite synthétique, des poudres de graphite naturel et des fibres de graphite.

**10.** Procédé suivant la revendication 9, dans lequel la poudre réfractaire est une poudre de $TiB_2$, et la poudre à action d'inhibition de croissance des grains est une poudre de graphite synthétique.

F I G. 1

Flexural Strength PSI

w/o Graphite

EP 0 375 148 B1

F I G. 2